# EUROPÄISCHE PATENTSCHRIFT

(11) **EP 3 969 195 B1**
(45) Veröffentlichungstag und Bekanntmachung des Hinweises auf die Patenterteilung: **23.11.2022**
(21) Anmeldenummer: 20734104.1
(22) Anmeldetag: 12.05.2020
(51) Int. Cl.: B21C 1/16, B21C 1/22, B21C 51/00

(54) **ZIEHANLAGE ZUR ERZEUGUNG VON METALLPROFILEN SOWIE VERFAHREN ZUM AUTOMATISCHEN BETRIEB EINER SOLCHEN ZIEHANLAGE**
DRAWING SYSTEM FOR GENERATING PROFILED METAL SECTIONS, AND METHOD FOR AUTOMATICALLY OPERATING SUCH A DRAWING SYSTEM
SYSTÈME D'ÉTIRAGE PERMETTANT DE PRODUIRE DES PROFILÉS MÉTALLIQUES AINSI QUE PROCÉDÉ DE FONCTIONNEMENT AUTOMATIQUE D'UN TEL SYSTÈME D'ÉTIRAGE

(30) Priorität: 13.05.2019 DE 102019206878
(43) Veröffentlichungstag der Anmeldung: 23.03.2022
(73) Patentinhaber: SMS Group GmbH, 40237 Düsseldorf (DE)
(72) Erfinder: CMIEL, Thomas, 52076 Aachen (DE); HESSBERGER, Dirk, 6291BM Vaals, NL (NL)
(74) Vertreter: Kross, Ulrich
(86) Internationale Anmeldenummer: PCT/EP2020/063165
(87) Internationale Veröffentlichungsnummer: WO 2020/229457

(56) Entgegenhaltungen:
- US-A1- 2002 043 091
- US-A1- 2018 354 053

## Beschreibung

### Technisches Gebiet

Die Erfindung betrifft eine Ziehanlage zur Erzeugung von Metallprofilen sowie ein Verfahren zum automatischen Betrieb einer solchen Ziehanlage.

Die Erfindung betrifft insbesondere eine Ziehanlage zur Erzeugung von Metallprofilen umfassend wenigstens einen Qualitätssensor zur Erfassung wenigstens eines Qualitätsmerkmals eines Zwischenerzeugnisses oder eines Enderzeugnisses eines Ziehguts, wenigstens einen vorzugsweise geschlossenen Regelkreis, der über wenigstens einen Regler auf wenigstens einen qualitätsrelevanten Parameter der Ziehanlage einwirkt.

Die Erfindung betrifft weiterhin ein Verfahren zum automatischen Betrieb einer Ziehanlage, bei welchem mittels wenigstens eines Qualitätssensors wenigstens ein qualitätsrelevantes Merkmal eines Ziehguts, ausgewählt aus einer Gruppe von Merkmalen umfassend die Geradheit des Ziehguts, die Länge des Ziehguts, den Durchmesser und/oder wenigstens eine Dicke des Ziehguts, die Rundheit des Ziehguts und die Oberflächenbeschaffenheit des Ziehguts gemessen wird, der erhaltene Messwert in wenigstens einem Regelkreis verarbeitet wird, der über wenigstens einen Regler auf wenigstens eine qualitätsrelevante Stellgröße der Ziehanlage oder von Teilen der Ziehanlage einwirkt.

### Hintergrund der Erfindung

Ziehanlagen zum Ziehen von beispielsweise Stahl, Messing, Kupfer als Vollmaterial oder auch als Rohr werden heutzutage in der Regel manuell vom Bediener eingestellt. Eine solche Anlage umfasst eine große Anzahl von Parametern, die von dem Bediener intuitiv und aufgrund seiner Erfahrung eingestellt werden. In der Regel wird das Endprodukt nur stichprobenartig vom Bediener selbst oder von einer Qualitätssicherung überprüft. Qualitätsmerkmale des fertigen Metallprofils sind beispielsweise Geradheit, Längentoleranz, Durchmessertoleranz, Qualität der Oberflächenrauigkeit oder die Fas- und Plangeometrie der Enden.

Eine gattungsgemäße Ziehanlage als sogenannte "Konti - Ziehmaschine" ist beispielsweise aus der DE 41 08 848 A1 bekannt. Dieses Dokument beschreibt eine Ziehanlage mit einer Konti - Ziehmaschine mit zwei Spannwagen und einer in einer Hohlkugel gelagerten Ziehdüse, deren Drehlage von Stellmitteln eingestellt wird. Mit der winkeligen Einstellung der Ziehdüse wird das Geradheitsergebnis des gezogenen Drahtes verbessert. Die Geradheitsabweichung des Drahtes wird auslaufseitig der Ziehmaschine an einem Führungstrichter gemessen. Über einen Regelkreis erfolgt eine automatische Einstellung der Stellmittel in Abhängigkeit von dem gemessenen Geradheitsergebnis.

Die DE 44 12 268 A1 beschreibt ein Verfahren zum automatischen Betrieb einer Steuerungs- und Regelungseinrichtung für die Ziehantriebe einer Ziehmaschine. Bei diesem Verfahren werden die für die prozessabhängige Regelung der Antriebe erforderlichen Größen von der Drehzahl, dem Drehmoment und der Stromaufnahme der Antriebe abgeleitet.

Der zuvor beschriebene Stand der Technik trägt jeweils nur zu Teilaspekten der Produktivität einer Ziehanlage bei. Die bekannten Lösungen tragen insbesondere nicht dem Problem Rechnung, dass eine Ziehanlage bei Produktwechsel erneut eingestellt werden muss und dass für die Einstellung bzw. Einrichtung der Maschine eine Vielzahl von Parametern neu eingestellt werden müssen.

Aus der US 2018/354053 A1 ist eine Ziehanlage zur Herstellung von Schweißdraht gemäß Oberbegriff von Anspruch 1 bekannt. Diese umfasst eine Einrichtung zum Aufheizen des Schweißdrahts, wobei zur Steuerung der Heiztemperatur ein Regelkreis vorgesehen ist, mit welchem die Heizleistung geregelt wird.

Weiterer Stand der Technik ist aus der US 2002/043091 A1 bekannt.

### Darstellung der Erfindung

Der Erfindung liegt die Aufgabe zugrunde, eine Ziehanlage sowie ein Verfahren zum automatischen Betrieb der Ziehanlage bereitzustellen, mit der die Qualität des Endprodukts in einem hohen Maß reproduzierbar ist.

Die der Erfindung zugrunde liegende Aufgabe wird gelöst durch die Merkmale der Patentansprüche 1 und 6. Vorteilhafte Ausgestaltungen der Erfindung ergeben sich aus den Unteransprüchen, die bevorzugte Ausführungen der Erfindung betreffen.

Die Ziehanlage gemäß der Erfindung zeichnet sich insbesondere durch wenigstens eine Prozesssteuerung aus, in der wenigstens eine Führungsgröße des geschlossenen Regelkreises bezogen auf ein spezifisches Ziehgut in Form eines Zwischenerzeugnisses und/oder Enderzeugnisses in Form eines einstellbaren Betriebspunkts der Ziehanlage oder einzelner Teile der Ziehanlage verarbeitet wird.

Die Prozesssteuerung kann wenigstens einen selbstlernenden Algorithmus umfassen, der bezogen auf ein spezifisches Ziehgut einen optimalen Betriebspunkt der Ziehanlage oder von Teilen der Ziehanlage ermittelt.

Der betreffende Betriebspunkt kann von der Prozesssteuerung selbsttätig angefahren werden.

Zweckmäßigerweise ist vorgesehen, dass die Ziehanlage eine Bedieneinheit umfasst, mit welcher der gewünschte oder optimalen Betriebspunkt der Ziehanlage oder von Teilen der Ziehanlage anwählbar ist, wobei die Bedieneinheit auf den wenigstens einen Regler einwirkt, der den betreffenden Betriebspunkt der Ziehanlage oder des betreffenden Teils der Ziehanlage automatisch einstellt.

Weiterhin kann vorgesehen sein, dass dem Bediener der Ziehanlage über ein Display an der Bedieneinheit vorgeschlagen wird, einen bestimmten produktspezifischen Betriebspunkt der Ziehanlage anzufahren.

Ein Vorteil der erfindungsgemäßen Ziehanlage ist auch darin zu sehen, dass die Ziehanlage gemäß der Erfindung es ermöglicht, End- und/oder Zwischenerzeugnisse nach vordefinierten Qualitäten, beispielsweise nach vordefinierten Toleranzklassen oder nach definierten Prüfzeugnissen auszugeben.

Die Prozesssteuerung kann über das Display der Bedieneinheit einen Vorschlag für einen anzufahrenden Betriebspunkt bezogen auf ein spezifisches Ziehgut und gegebenenfalls auch für ein einzelnes zu beeinflussendes Qualitätsmerkmal ausgeben. Der Bediener kann den entsprechenden Betriebspunkt dann manuell anwählen.

Die Prozesssteuerung kann eine Speicher- und Auswerteeinheit umfassen, in der ein produktspezifischer Betriebspunkt speicherbar ist und aus welcher ein solcher Betriebspunkt mittels wenigstens einer Bedieneinheit abrufbar ist.

Die Ziehanlage gemäß der Erfindung kann zum Ziehen von beispielsweise Stahl, Messing, Kupfer, Aluminium oder anderer Nichteisenmetalle ausgebildet sein, sowohl als Vollmaterial oder auch rohrförmig oder in Form von beliebigen anderen Profilen. Die Ziehanlage gemäß der Erfindung kann beispielsweise als Ziehanlage für Blankstahl ausgebildet sein.

Eine Ziehanlage im Sinne der vorliegenden Erfindung umfasst beispielsweise Anlagenteile in Form von Vorrichtern, Strahlanlagen, Einstoßvorrichtungen, Zieheinheiten, Profilrichtern, Schlagscheren, insbesondere hydraulischen Schlagscheren, Rohrführungen, Walz-Richtmaschinen, Anfasmaschinen und dergleichen.

Erfindungsgemäß sind an der Ziehanlage gemäß der Erfindung ein oder mehrere Regelkreise vorgesehen, die das Zwischen- oder Endprodukt der Ziehanlage überprüfen und durch Parameteränderungen das Produkt optimieren.

Der Qualitätssensor ist ausgewählt aus einer Gruppe von Qualitätssensoren umfassend wenigstens einen Sensor zur Erfassung der Geradheit des Ziehguts, wenigstens einen Sensor zur Erfassung des Durchmessers und/oder der Dicke des Ziehguts, wenigstens einen Sensor zur Erfassung der Länge des Ziehguts, wenigstens einen Sensor zur Erfassung der Oberflächenbeschaffenheit des Ziehguts und wenigstens einen Sensor zur Erfassung der Rundheit, der Qualität der gefasten Enden des Ziehguts oder der sonstigen Maßhaltigkeit des Ziehguts.

Messwerte aus der Erfassung der Geradheit eines Zwischenprodukts oder eines Endprodukts können beispielsweise zur automatischen Einstellung von Vorrichtern, Ziehsteinhaltern oder Profil-Richtapparaten oder zur Einstellung von Richt- und Poliermaschinen verwendet werden, wobei unter Einstellung im Sinne der Erfindung eine automatische Einstellung mithilfe wenigstens eines vorzugsweise geschlossenen Regelkreises zu verstehen ist. Diese Einstellung erfolgt vorzugsweise kontinuierlich während des Betriebs der Ziehanlage bzw. während des Betriebs der betreffenden Anlagenteile.

Messwerte aus einer Durchmessermessung können beispielsweise zur Einstellung einer Richt- und Poliermaschine verwendet werden. Oberflächenmessungen, beispielsweise eine Rauigkeitsmessung an einem Zwischenerzeugnis können beispielsweise zur Optimierung der Strahlleistung einer Strahlanlage bei der Blankstahlherstellung verwertet werden. Die Oberflächenmessung kann beispielsweise vor oder hinter der Entzunderung vorgenommen werden.

Vorzugsweise umfasst die Ziehanlage eine Vielzahl von Regelkreisen, wobei jeder Regelkreis auf einen anderen qualitätsrelevanten Parameter der Ziehanlage oder von Teilen der Ziehanlage einwirkt.

Bei einer bevorzugten Variante der Ziehanlage gemäß der Erfindung wirkt die Speicher- und Auswerteeinheit auf eine Regeleinheit ein, die eine Vielzahl von Reglern ansteuert.

Die der Erfindung zugrunde liegende Aufgabe wird weiterhin gelöst durch ein Verfahren zum automatischen Betrieb einer Ziehanlage mit den vorstehend beschriebenen Merkmalen, bei welchem mittels wenigstens eines Qualitätssensors wenigstens ein qualitätsrelevantes Merkmal eines Ziehguts, ausgewählt aus einer Gruppe von Merkmalen umfassend die Geradheit des Ziehguts, die Länge des Ziehguts, den Durchmesser und/oder wenigstens eine Dicke des Ziehguts, die Rundheit des Ziehguts die Maßhaltigkeit der gefasten Enden des Ziehguts und die Oberflächenbeschaffenheit des Ziehguts gemessen wird, der erhaltene Messwert in wenigstens einem Regelkreis verarbeitet wird, der über wenigstens einen Regler auf wenigstens eine qualitätsrelevante Stellgröße der Ziehanlage oder von Teilen der Ziehanlage einwirkt, wobei in einer Prozesssteuerung wenigstens eine Führungsgröße für wenigstens ein qualitätsrelevantes Merkmal eines spezifisches Ziehguts in Form eines Zwischenerzeugnisses und/oder Enderzeugnisses verarbeitet wird, wobei die Führungsgröße einen Betriebspunkt der Ziehanlage oder von Teilen der Ziehanlage definiert oder zur Definition eines Betriebspunkts der Ziehanlage oder von Teilen der Ziehanlage verwendet wird und der Betriebspunkt in Abhängigkeit eines spezifischen Ziehguts einstellbar ist.

Die Prozesssteuerung kann wenigstens einen selbstlernenden Algorithmus umfassen, der bezogen auf ein spezifisches Ziehgut einen optimalen Betriebspunkt der Ziehanlage oder von Teilen der Ziehanlage ermittelt.

Der betreffende Betriebspunkt kann von der Prozesssteuerung selbsttätig angefahren werden.

Alternativ kann vorgesehen sein, den gewünschten oder optimalen Betriebspunkt der Ziehanlage oder von Teilen der Ziehanlage über eine Bedieneinheit anzuwählen, die auf den wenigstens einen Regler einwirkt, der den betreffenden Betriebspunkt der Ziehanlage oder des betreffenden Teils der Ziehanlage automatisch einstellt.

Alternativ kann das Verfahren vorsehen, dass dem Bediener der Ziehanlage über ein Display an der Bedieneinheit vorgeschlagen wird, einen bestimmten produktspezifischen Betriebspunkt der Ziehanlage anzufahren.

Auf diese Art und Weise kann beispielsweise bei einem Produktwechsel die Ziehanlage unmittelbar automatisch mit allen hierzu erforderlichen Parametern auf das neue Produkt bzw. auf das neue Ziehgut eingestellt werden. Dadurch werden etwaige Umrüstzeiten sowie der Ausschuss beim Anfahren der Ziehanlage reduziert.

Bei einer zweckmäßigen Variante des Verfahrens gemäß der Erfindung ist vorgesehen, dass die Prozesssteuerung eine Speicher- und Auswerteeinrichtung umfasst, in der wenigstens ein Betriebspunkt der Ziehanlage abgespeichert wird.

Vorzugsweise wird eine Vielzahl von qualitätsrelevanten Merkmalen des Ziehguts gemessen, wobei jeder Messwert wenigstens in einem Regelkreis verarbeitet wird.

Beispielsweise kann vorgesehen sein, dass ein Betriebspunkt der Ziehanlage oder von Teilen der Ziehanlage durch eine Vielzahl von Führungsgrößen definiert wird.

Eine Variante des Verfahrens zeichnet sich dadurch aus, dass wenigstens ein Messwert in einer Vielzahl von Regelkreisen verarbeitet wird.

Jeweils ein produktspezifischer Betriebspunkt kann über eine Vielzahl von jeweils Regelkreisen der Ziehanlage definiert werden.

Bei einer besonders bevorzugten Variante der Erfindung ist vorgesehen, dass ein Betriebspunkt der Ziehanlage während des Betriebs jeweils bezogen auf ein spezifisches Ziehgut optimiert wird. Dieser optimale Betriebspunkt wird jeweils als beste Einstellung bezogen auf ein spezifisches Ziehgut in der Speicher- und Auswerteeinheit der Ziehanlage abgespeichert.

In einer Ziehanlage der eingangs genannten Art haben gegebenenfalls mehrere Anlagenteile bzw. Aggregate Einfluss auf eine einziges qualitätsrelevantes Merkmal des Zwischenprodukts oder des Enderzeugnisses des Ziehguts. Mehrere Anlagenteile können beispielsweise Einfluss auf die Geradheit des Ziehguts haben. Deshalb kann in einer bevorzugten Variante des Verfahrens vorgesehen sein, dass ein einziger Messwert für ein bestimmtes qualitätsrelevantes Merkmal eines Ziehguts als Führungsgröße, in Regelkreisen von jeweils aufeinanderfolgenden Teilen der Ziehanlage verarbeitet wird und dass die Regelkreise der aufeinanderfolgenden Teile der Ziehanlage kaskadenartig miteinander verknüpft sind, so dass aus der Regelabweichung nacheinander und/oder parallel Stellgrößen für aufeinanderfolgende Teile der Ziehanlage abgeleitet werden.

### Kurze Beschreibung der Figuren

Die Erfindung wird nachstehend unter Bezugnahme auf die beigefügten Zeichnungen erläutert, in denen
- Figur 1: eine schematische Darstellung eines geschlossenen Regelkreises an einer Ziehanlage gemäß der Erfindung zeigt und
- Figur 2: eine schematische Darstellung des Regelschemas mit mehreren geschlossenen Regelkreisen an einer Ziehanlage gemäß der Erfindung zeigt.

### Detaillierte Beschreibung bevorzugter Ausführungsbeispiele

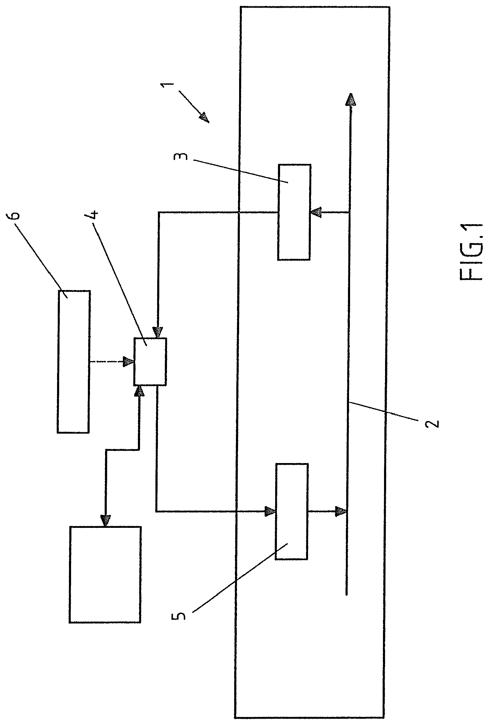

Figur 1 zeigt schematisch eine automatische Regelung an einer Ziehanlage 1 gemäß der Erfindung als Blockschaltbild. Die Ziehanlage 1 kann beispielsweise zur Erzeugung von Blankstahl eines durch ein Stranggießverfahren und anschließendes Walzen hergestellten Drahts ausgebildet sein. Ein Werkstück 2 als Ziehgut, beispielsweise in Form eines runden Drahts, durchläuft die Ziehanlage 1 von links nach rechts, wobei ausgangsseitig ein Qualitätsmerkmal des Drahts (beispielsweise Dicke, Durchmesser, Rauigkeit, Geradheit oder Maßhaltigkeit eines gefassten Endes des Ziehguts) mit einem Qualitätssensor 3 gemessen wird. Der erhaltene Messwert wird einer Prozesssteuerung 4 zugeführt. Die Prozesssteuerung 4 umfasst eine Speicher- und Auswerteinheit sowie wenigstens einen Regler, der über die Ausgabe einer entsprechenden Stellgröße auf eine Stelleinrichtung 5 zur Beeinflussung eines qualitätsrelevanten Parameters der Ziehanlage 1 einwirkt. Über eine Bedieneinheit 6 lassen sich externe Informationen in die Prozesssteuerung 4 eingeben. Über die Bedieneinheit lässt sich ein produktspezifischer Betriebspunkt der Ziehanlage 1 einstellen.

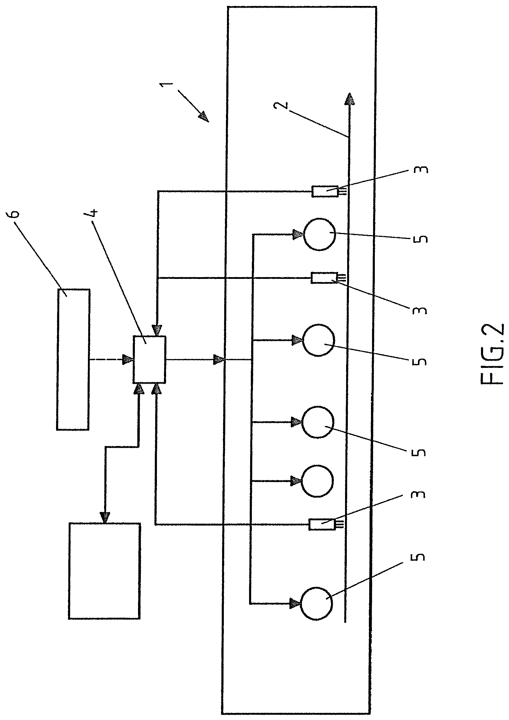

Das Blockschaltbild gemäß Figur 2 erweitert das in Figur 1 dargestellte Regelschema auf eine Vielzahl von Qualitätssensoren 3 und eine Vielzahl von Stelleinrichtungen 5 für die Ziehanlage 1 gemäß der Erfindung. Gleiche Teile sind mit entsprechenden Bezugszeichen versehen. Im Übrigen entspricht das Blockschaltbild gemäß Figur 2 prinzipiell demjenigen gemäß Figur 1.

### Bezugszeichenliste

- 1: Ziehanlage
- 2: Werkstück
- 3: Qualitätssensor
- 4: Prozesssteuerung
- 5: Stelleinrichtungen
- 6: Bedieneinheit

## Patentansprüche

1. Ziehanlage (1) zur Erzeugung von Metallprofilen umfassend wenigstens einen Regelkreis, der über wenigstens einen Regler auf wenigstens einen qualitätsrelevanten Parameter der Ziehanlage einwirkt, wenigstens eine Prozesssteuerung (4), in der wenigstens eine Führungsgröße des Regelkreises bezogen auf ein spezifisches Ziehgut in Form eines Zwischenerzeugnisses und/oder Enderzeugnisses in Form eines einstellbaren Betriebspunkts der Ziehanlage (1) oder einzelner Teile der Ziehanlage (1) verarbeitet wird, **gekennzeichnet durch** wenigstens einen Qualitätssensor (3) zur vorzugsweise fortlaufenden Erfassung wenigstens eines Qualitätsmerkmals eines Zwischenerzeugnisses oder eines Enderzeugnisses eines Ziehguts, wobei der Qualitätssensor (3) ausgewählt ist aus einer Gruppe von Qualitätssensoren umfassend einen Sensor zur Erfassung der Geradheit des Ziehguts, einen Sensor zur Erfassung des Durchmessers und/oder wenigstens einer Dicke des Ziehguts, einen Sensor zur Erfassung der Länge des Ziehguts, einen Sensor zur Erfassung der Oberflächenbeschaffenheit des Ziehguts einen Sensor zur Erfassung der Rundheit des Ziehguts und einen Sensor zur Kontrolle der gefasten Enden des Ziehguts.

2. Ziehanlage nach Anspruch 1, **dadurch gekennzeichnet, dass** der Betriebspunkt für das spezifische Zwischenerzeugnis oder das Enderzeugnis über eine Bedieneinheit (6) wählbar ist, die auf den wenigstens einen Regler einwirkt, der den betreffenden Betriebspunkt der Ziehanlage (1) für ein spezifisches Ziehgut automatisch einstellt.

3. Ziehanlage nach Anspruch 1 oder 2, **dadurch gekennzeichnet, dass** die Prozesssteuerung (4) wenigstens eine Speicher- und Auswerteeinheit umfasst, in welcher der Betriebspunkt für das spezifische Zwischenerzeugnisses oder das Enderzeugnis abspeicherbar ist.

4. Ziehanlage nach einem der Ansprüche 1 bis 3, **gekennzeichnet durch** eine Vielzahl von Regelkreisen, wobei jeder Regelkreis auf einen anderen qualitätsrelevanten Parameter der Ziehanlage (1) oder von Teilen der Ziehanlage (1) einwirkt.

5. Ziehanlage nach einem der Ansprüche 1 bis 4 **dadurch gekennzeichnet, dass** die Prozesssteuerung (4) auf eine Regeleinheit einwirkt, die eine Vielzahl von Reglern ansteuert.

6. Verfahren zum automatischen Betrieb einer Ziehanlage (1) mit den Merkmalen eines der Patentansprüche 1 bis 5, bei welchem mittels wenigstens eines Qualitätssensors (3) wenigstens ein qualitätsrelevantes Merkmal eines Ziehguts, ausgewählt aus einer Gruppe von Merkmalen umfassend die Geradheit des Ziehguts, die Länge des Ziehguts, den Durchmesser und/oder wenigstens eine Dicke des Ziehguts, die Rundheit des Ziehguts die Profilhaltigkeit des Ziehguts, die Qualität der gefasten Enden des Ziehguts und die Oberflächenbeschaffenheit des Ziehguts gemessen wird, der erhaltene Messwert in wenigstens einem Regelkreis verarbeitet wird, der über wenigstens einen Regler auf wenigstens eine qualitätsrelevante Stellgröße der Ziehanlage oder von Teilen der Ziehanlage einwirkt, **dadurch gekennzeichnet, dass** in einer Prozesssteuerung (4) wenigstens eine Führungsgröße für wenigstens ein qualitätsrelevantes Merkmal eines spezifisches Ziehguts in Form eines Zwischenerzeugnisses und/oder Enderzeugnisses verarbeitet wird, dass die Führungsgröße einen Betriebspunkt der Ziehanlage oder von Teilen der Ziehanlage definiert oder zur Definition eines Betriebspunkts der Ziehanlage oder von Teilen der Ziehanlage verwendet wird und dass der Betriebspunkt in Abhängigkeit eines spezifischen Ziehguts einstellbar ist.

7. Verfahren nach Anspruch 6, **dadurch gekennzeichnet, dass** die Prozesssteuerung eine Speicher- und Auswerteeinrichtung umfasst, in der wenigstens ein Betriebspunkt der Ziehanlage abgespeichert wird.

8. Verfahren nacheinem der Ansprüche 6 oder 7, **dadurch gekennzeichnet, dass** eine Vielzahl von qualitätsrelevanten Merkmalen des Ziehguts gemessen wird, dass jeder Messwert wenigstens in einem eigenen Regelkreis verarbeitet wird.

9. Verfahren nach einem der Ansprüche 6 bis 8, **dadurch gekennzeichnet, dass** ein Betriebspunkt der Ziehanlage (1) oder von Teilen der Ziehanlage (1) durch eine Vielzahl von Führungsgrößen definiert wird.

10. Verfahren nach einem der Ansprüche 6 bis 9, **dadurch gekennzeichnet, dass** wenigstens ein Messwert in einer Vielzahl von Regelkreisen verarbeitet wird.

11. Verfahren nach einem der Ansprüche 6 bis 10, **dadurch gekennzeichnet, dass** ein produktspezifischer Betriebspunkt über eine Vielzahl von Regelkreisen der Ziehanlage (1) definiert wird.

12. Verfahren nach einem der Ansprüche 6 bis 11, **dadurch gekennzeichnet, dass** ein Betriebspunkt der Ziehanlage (1) während des Betriebs jeweils bezogen auf ein spezifisches Ziehgut optimiert wird.

13. Verfahren nach einem der Ansprüche 6 bis 12, **dadurch gekennzeichnet, dass** wenigstens ein Messwert fortlaufend während des Betriebs der Ziehanlage (1) erfasst wird.

14. Verfahren nach einem der Ansprüche 1 bis 13, **dadurch gekennzeichnet, dass** ein einziger Messwert für ein bestimmtes qualitätsrelevantes Merkmal eines Ziehguts als Führungsgröße in Regelkreisen von jeweils aufeinanderfolgenden Teilen der Ziehanlage (1) verarbeitet wird und dass die Regelkreise der aufeinanderfolgenden Teile der Ziehanlage (1) kaskadenartig miteinander verknüpft sind, so dass aus der Regelabweichung nacheinander und/oder parallel Stellgrößen für aufeinanderfolgende Teile der Ziehanlage (1) abgeleitet werden.

## Claims

1. Drawing installation (1) for producing profiled metal sections, comprising at least one regulating circuit which acts by way of at least one regulator on at least one quality-relevant parameter of the drawing installation, at least one process control (4) in which at least one guide variable of the regulating circuit, which is referred to a specific drawing material in the form of an intermediate product and/or end product and is in the form of a settable operating point of the drawing plant (1) or individual parts of the drawing plant (1), is processed, **characterised by** at least one quality sensor (3) for preferably continuous detection of at least one quality feature of an intermediate product or an end product of a drawing material, wherein the quality sensor (3) is selected from a group of quality sensors comprising a sensor for detecting the rectilinearity of the drawing material, a sensor for detecting the diameter and/or at least one thickness of the drawing material, a sensor for detecting the length of the drawing material, a sensor for detecting the surface property of the drawing material, a sensor for detecting the roundness of the drawing material and a sensor for checking the bevelled ends of the drawing material.

2. Drawing plant according to claim 1, **characterised in that** the operating point for the specific intermediate product or the end product is selectable by way of a control unit (6) which acts on the at least one regulator, which automatically sets the relevant operating point of the drawing plant (1) for a specific drawing material.

3. Drawing plant according to claim 1 or 2, **characterised in that** the process control (4) comprises at least one storing and evaluating unit in which the operating point for the specific intermediate product or the end product can be stored.

4. Drawing plant according to any one of claims 1 to 3, **characterised by** a plurality of regulating circuits, wherein each regulating circuit acts on a different quality-relevant parameter of the drawing plant (1) or parts of the drawing plant (1).

5. Drawing plant according to any one of claims 1 to 4, **characterised in that** the process control (4) acts on a regulating unit which activates a plurality of regulators.

6. Method for automatic operation of a drawing plant (1) with the features of any one of claims 1 to 5, in which at least one quality-relevant feature, which is selected from a group of features comprising the rectilinearity of the drawing material, the length of the drawing material, the diameter and/or at least one thickness of the drawing material, the roundness of the drawing material, the capability of the drawing material to retain a profile, the quality of the bevelled ends of the drawing material and the surface property of the drawing material, of the drawing material is measured by means of at least one quality sensor (3), the obtained measurement value is processed in at least one regulating circuit which acts by way of at least one regulator on at least one quality-relevant setting variable of the drawing plant or parts of the drawing plant, **characterised in that** at least one guide variable for at least one quality-relevant material of a specific drawing material in the form of an intermediate product and/or end product is processed in a process control (4), the guide variable defines an operating point of the drawing plant or parts of the drawing plant or is used for definition of an operating point of the drawing plant or parts of the drawing plant, and the operating point is settable in dependence on a specific drawing material.

7. Method according to claim 6, **characterised in that** the process control comprises a storing and evaluating device in which at least one operating point of the drawing plant is stored.

8. Method according to one of claims 6 and 7, **characterised in that** a plurality of quality-relevant features of the drawing material is measured and each measurement value is processed at least in an individual regulating circuit.

9. Method according to any one of claims 6 to 8, **characterised in that** an operating point of the drawing plant (1) or parts of the drawing plant (1) is defined by a plurality of guide variables.

10. Method according to any one of claims 6 to 9, **characterised in that** at least one measurement value is processed in a plurality of regulating circuits.

11. Method according to any one of claims 6 to 10, **characterised in that** a product-specific operating point is defined by way of a plurality of regulating circuits of the drawing plant (1).

12. Method according to any one of claims 6 to 11, **characterised in that** an operating point of the drawing plant (1) is optimised, during operation, in each instance with reference to a specific drawing material.

13. Method according to any one of claims 6 to 12, **characterised in that** at least one measurement value is continuously detected during operation of the drawing plant (1).

14. Method according to any one of claims 1 to 13, **characterised in that** a single measurement value for a specific quality-relevant feature of a drawing material is processed as guide variable in regulating circuits of respectively successive parts of the drawing plant (1) and the regulating circuits of the successive parts of the drawing plant (1) are interlinked in cascade manner so that successive and/or parallel setting variables for successive parts of the drawing plant (1) are derived from the regulating difference.

## Revendications

1. Installation d'étirage (1) destinée à la production de profilés métalliques, qui comprend : au moins un circuit de réglage qui agit, par l'intermédiaire d'au moins un dispositif de réglage, sur au moins un paramètre de l'installation d'étirage, pertinent en ce qui concerne la qualité ; au moins une commande de processus (4) dans laquelle on traite au moins une valeur de guidage du circuit de réglage, en se référant à une marchandise spécifique qui doit être soumise à un étirage sous la forme d'un produit semi-fini et/ou d'un produit fini, sous la forme d'un point de fonctionnement de l'installation d'étirage (1) ou de parties individuelles de l'installation d'étirage (1), qui peut être réglé, **caractérisée par** au moins un capteur de la qualité (3) qui est destiné à enregistrer de préférence en continu au moins une caractéristique de qualité d'un produit semi-fini ou d'un produit fini d'une marchandise qui doit être soumise à un étirage ; dans lequel le capteur de la qualité (3) est choisi à partir d'un groupe de capteurs de la qualité qui comprend : un capteur qui est destiné à l'enregistrement de la planéité de la marchandise qui doit être soumise à un étirage, un capteur qui est destiné à l'enregistrement du diamètre et/ou d'au moins une épaisseur de la marchandise qui doit être soumise à un étirage, un capteur qui est destiné à l'enregistrement de la longueur de la marchandise qui doit être soumise à un étirage, un capteur qui est destiné à l'enregistrement de l'état de la surface de la marchandise qui doit être soumise à un étirage, un capteur qui est destiné à l'enregistrement de la sphéricité de la marchandise qui doit être soumise à un étirage, et un capteur qui est destiné au contrôle des extrémités chanfreinées de la marchandise qui doit être soumise à un étirage.

2. Installation d'étirage selon la revendication 1, **caractérisée en ce que** le point de fonctionnement pour le produit semi-fini spécifique ou pour le produit fini peut être sélectionné par l'intermédiaire d'une unité d'exploitation (6) qui agit sur au moins un dispositif de réglage qui règle de manière automatique le point de fonctionnement concerné de l'installation d'étirage (1) pour une marchandise spécifique qui doit faire l'objet d'un étirage.

3. Installation d'étirage selon la revendication 1 ou 2, **caractérisée en ce que** la commande de processus (4) comprend au moins une unité faisant office de mémoire et une unité d'évaluation, dans laquelle on peut mettre en mémoire le point de fonctionnement pour le produit semi-fini spécifique ou pour le produit fini.

4. Installation d'étirage selon l'une quelconque des revendications 1 à 3, **caractérisée par** une multitude de circuits de réglage ; dans laquelle chaque circuit de réglage agit sur un autre paramètre de l'installation d'étirage (1) ou de parties de l'installation d'étirage (1), pertinent en ce qui concerne la qualité.

5. Installation d'étirage selon l'une quelconque des revendications 1 à 4, **caractérisée en ce que** la commande de processus (4) agit sur une unité de réglage qui actionne une multitude de dispositifs de réglage.

6. Procédé destiné à l'exploitation automatique d'une installation d'étirage (1) qui comprend les caractéristiques en conformité avec l'une quelconque des revendications 1 à 5, dans lequel : au moyen d'au moins un capteur de la qualité (3) on mesure au moins une caractéristique d'une marchandise qui doit être soumise à un étirage, pertinente en ce qui concerne la qualité, qui est choisie parmi un groupe de caractéristiques qui comprend : la linéarité de la marchandise qui doit être soumise à un étirage, la longueur de la marchandise qui doit être soumise à un étirage, le diamètre et/ou au moins une épaisseur de la marchandise qui doit être soumise à un étirage, la sphéricité de la marchandise qui doit être soumise à un étirage, le maintien du profilé de la marchandise qui doit être soumise à un étirage, la qualité des extrémités chanfreinées de la marchandise qui doit être soumise à un étirage et l'état de la surface de la marchandise qui doit être soumise à un étirage ; on traite la valeur de mesure que l'on a obtenue, dans au moins un circuit de réglage qui agit, par l'intermédiaire d'au moins un dispositif de réglage, sur au moins une valeur de réglage de l'installation d'étirage ou de parties de l'installation d'étirage, pertinente en ce qui concerne la qualité, **caractérisé en ce que** : dans une commande de processus (4), on traite au moins une valeur de guidage pour au moins une caractéristique d'une marchandise spécifique qui doit être soumise à un étirage, sous la forme d'un produit semi-fini et/ou d'un produit fini, pertinente en ce qui concerne la qualité ; **en ce que** la valeur de guidage définit un point de fonctionnement de l'installation d'étirage ou de parties de l'installation d'étirage ou est utilisée à des fins de définition d'un point de fonctionnement de l'installation d'étirage ou de parties de l'installation d'étirage ; et **en ce que** l'on peut régler le point de fonctionnement en fonction d'une marchandise spécifique qui doit faire l'objet d'un étirage.

7. Procédé selon la revendication 6, **caractérisé en ce que** la commande de processus comprend un mécanisme de mise en mémoire et d'évaluation, dans lequel on met en mémoire au moins un point de fonctionnement de l'installation d'étirage.

8. Procédé selon l'une quelconque des revendications 6 ou 7, **caractérisé en ce que** l'on mesure une multitude de caractéristiques de la marchandise qui doit faire l'objet d'un étirage, pertinentes en ce qui concerne la qualité, **en ce que** l'on traite chaque valeur de mesure au moins dans un circuit de réglage propre.

9. Procédé selon l'une quelconque des revendications 6 à 8, **caractérisé en ce que** l'on définit un point de fonctionnement de l'installation d'étirage (1) ou de parties de l'installation d'étirage (1) par l'intermédiaire d'une multitude de valeurs de guidage.

10. Procédé selon l'une quelconque des revendications 6 à 9, **caractérisé en ce que** l'on traite au moins une valeur de mesure dans une multitude de circuits de réglage.

11. Procédé selon l'une quelconque des revendications 6 à 10, **caractérisé en ce que** l'on définit un point de fonctionnement spécifique pour un produit par l'intermédiaire d'une multitude de circuits de réglage de l'installation d'étirage (1).

12. Procédé selon l'une quelconque des revendications 6 à 11, **caractérisé en ce que** l'on optimise un point de fonctionnement de l'installation d'étirage (1) au cours de l'exploitation en se référant à chaque fois à une marchandise spécifique qui doit être soumise à un étirage.

13. Procédé selon l'une quelconque des revendications 6 à 12, **caractérisé en ce que** l'on enregistre en continu au moins une valeur de mesure au cours de l'exploitation de l'installation d'étirage (1).

14. Procédé selon l'une quelconque des revendications 1 à 13, **caractérisé en ce que** l'on traite une valeur de mesure individuelle pour une caractéristique déterminée d'une marchandise qui doit être soumise à un étirage, pertinente en ce qui concerne la qualité, sous la forme d'une valeur de guidage dans des circuits de réglage de parties de l'installation d'étirage (1) qui se succèdent de manière respective et **en ce que** l'on relie les uns aux autres en formant une cascade les circuits de réglage des parties de l'installation d'étirage (1), qui se succèdent l'une l'autre, d'une manière telle que l'on dérive, à partir de l'écart de réglage, des valeurs de réglage l'une après l'autre et/ou en parallèle, pour des parties de l'installation d'étirage (1) qui se succèdent l'une l'autre.
